# EUROPEAN PATENT APPLICATION

(11) **EP 4 685 523 A1**
(43) Date of publication of application: **28.01.2026**
(21) Application number: 25187983.9
(22) Date of filing: 07.07.2025
(51) Int. Cl.: G01S 19/21

(54) **SPOOFING DETECTION USING GNSS CLOCK OFFSET AND MOVING WINDOW CURVE FIT**

(30) Priority: 25.07.2024 US 202418784590
(71) Applicant: Honeywell International Inc., Charlotte, NC 28202 (US)
(72) Inventor: SCHIPPER, Brian, Charlotte, 28202 (US); KRISHNAN, Vignesh, Charlotte, 28202 (US)
(74) Representative: Haseltine Lake Kempner LLP

(57) **Abstract**

A system comprises circuitry configured to: receive a plurality of GNSS signals; determine GNSS measurements based on the GNSS signals; compute a solution for position and clock offset based on the GNSS measurements; place the clock offset of the solution into a moving window time buffer having a time window; perform a curve fit procedure on the clock offset of the solution in the moving window time buffer to obtain a curve fit; compute curve fit residuals by subtracting the curve fit from the clock offset; examine magnitudes of the curve fit residuals over the time window to identify a largest curve fit residual of the curve fit residuals in the time window; determine whether the largest curve fit residual in the time window exceeds a predetermined detection threshold; and determine that spoofing is present when the largest curve fit residual in the time window exceeds the predetermined detection threshold.

## Description

### BACKGROUND

Global Navigation Satellite System (GNSS) receivers can receive signals from GNSS satellites to determine a position of GNSS receiver.

### SUMMARY

A system comprises: circuitry configured to: receive a plurality of global navigation satellite system (GNSS) signals; determine GNSS measurements based on the GNSS signals; compute a solution for position and clock offset based on the GNSS measurements; place the clock offset of the solution into a moving window time buffer having a time window of a particular size; perform a curve fit procedure on the clock offset of the solution in the moving window time buffer to obtain a curve fit; compute curve fit residuals by subtracting the curve fit from the clock offset; examine magnitudes of the curve fit residuals over the time window to identify a largest curve fit residual of the curve fit residuals in the time window; determine whether the largest curve fit residual in the time window exceeds a predetermined detection threshold; and determine that spoofing is present when the largest curve fit residual in the time window exceeds the predetermined detection threshold.

A method comprises: receiving a plurality of global navigation satellite system (GNSS) signals; determining GNSS measurements based on the GNSS signals; computing a solution for position and clock offset based on the GNSS measurements; placing the clock offset of the solution into a moving window time buffer having a time window of a particular size; performing a curve fit procedure on the clock offset of the solution in the moving window time buffer to obtain a curve fit; computing curve fit residuals by subtracting the curve fit from the clock offset; examining magnitudes of the curve fit residuals over the time window to identify a largest curve fit residual of the curve fit residuals in the time window; determining whether the largest curve fit residual in the time window exceeds a predetermined detection threshold; and determining that spoofing is present when the largest curve fit residual in the time window exceeds the predetermined detection threshold.

A non-transitory computer-readable medium comprises a set of instructions that, when executed by at least one processor, cause the at least one processor to: receive a plurality of global navigation satellite system (GNSS) signals; determine GNSS measurements based on the GNSS signals; compute a solution for position and clock offset based on the GNSS measurements; place the clock offset of the solution into a moving window time buffer having a time window of a particular size; perform a curve fit procedure on the clock offset of the solution in the moving window time buffer to obtain a curve fit; compute curve fit residuals by subtracting the curve fit from the clock offset; examine magnitudes of the curve fit residuals over the time window to identify a largest curve fit residual of the curve fit residuals in the time window; determine whether the largest curve fit residual in the time window exceeds a predetermined detection threshold; and determine that spoofing is present when the largest curve fit residual in the time window exceeds the predetermined detection threshold.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram illustrating an example Global Navigation Satellite System (GNSS) system.
Figures 2A-2B are block diagrams illustrating example systems.
Figure 3 is a block diagram illustrating a functional block diagram for an example system for generating curve fit residuals.
Figure 4 is an example method for determining spoofing is present in GNSS signals.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Global Navigation Satellite System (GNSS) receivers can receive signals from GNSS satellites to determine a position of the GNSS receiver. GNSS constellations (including Global Positioning System (GPS), GLONASS, Galileo, BeiDou, etc.) include a plurality of GNSS satellites that transmit signals including information regarding position and time of transmission of the signals. Signals are received from a plurality of GNSS satellites at a GNSS receiver and the GNSS receiver calculates a GNSS solution (such as a Position-Velocity-Time (PVT) solution). In examples, the GNSS solution includes a position of the GNSS receiver and a GNSS clock offset.

Spoofing attacks cause GNSS receiver to compute an incorrect solution. Spoofing is a problem for commercial, military, and civilian applications. While spoofing can occur anywhere, it tends to be a greater problem in parts of the world with more conflict. In examples, spoofing can cause pilots (and others relying on GNSS) to have GNSS, avionics, and other systems relying on GNSS loosing signal or indicating incorrect position that may result in alarms being triggered. Spoofing may occur when a signal source is not authenticated. Spoofing creates an opportunity for an unbounded position error. In examples, it may be not possible to verify if the position solution is accurate to within even the loosest horizontal/vertical requirements.

While pilots and others are becoming more aware of spoofing, it is desirable to be able to provide an indication to pilots when spoofing is likely occurring. As spoofing attacks continue to grow in frequency, the aviation industry has great interest in anti-spoofing capability to protect high-value assets from attack worldwide. In examples, techniques can be used to detect and indicate to pilots when something is wrong in cases of spoofing. In examples, the inclusion of spoofing detection capability addresses concerns with potential false alerts, such as indications that the position estimate may be unsafe to use in the absence of any signal corruption. In examples, a safe exclusion capability will be preferable to maintain required accuracy, integrity, continuity and availability enroute and during approach for aerial (and other) vehicles.

In examples, a method detects spoofing without requiring additional data over what is received by the GNSS receivers by observing the clock offset computed as part of the Position-Velocity-Time (PVT) solution. In examples, inertial sensor data or additional data may be also used to detect spoofing. In examples, the PVT solution is the primary result of processing GNSS measurements and is inherent in GNSS navigation solutions. In examples, the PVT solution solves for three dimensional position solution and a clock offset that is inherent in GNSS receivers because of imperfect clocks. In examples, GNSS receivers are built with relatively stable clocks that are not perfect and will have frequency errors so that each GNSS receiver's clock is running a bit fast or slow. In examples, the frequency errors are accounted for in GNSS PVT solution computations. In examples, the frequency error changes over time (generally slowly changing over time).

In examples, GNSS receivers have relatively stable clocks (with slowly varying frequency error) because the receiver tracking loops must be able to track clock error dynamics. In examples, relatively stable clocks are less expensive and are used in phones, cars, airplanes, etc. In examples, GNSS systems are designed with the use of GNSS receivers with relatively stable clocks that slowly drift. In examples, while the GNSS receivers relatively stable clocks do drift, the frequency error will not dramatically and abruptly jump (particularly under fairly consistent temperature conditions). In examples, the GNSS clock error grows proportional to the GNSS receiver clock frequency error. In examples, the growth rate also changes with changes in the frequency error. In examples, the GNSS clock error can be large and changing quickly.

In examples where the clock error dynamics are too big, the tracking loops will need to be designed to have bandwidth higher than what would be required by vehicle dynamics. In examples, this would undesirably increase the GNSS solution measurement noise. In examples, this stable clock error behavior enables the curve fit detection technique described herein. In examples, the GNSS receiver clocks, while not perfect, are generally well behaved and their error change slowly over time such that the GNSS receiver clocks are easily modeled with a polynomial over a time window. In examples, because the clock error is not jumping around over time, the clock error can be fit to a curve over a certain window of time and divergences from the curve will expose the presence of a spoofing attack. In examples, the spoofing detection technique monitors the clock error state and utilizes curve fitting and residual testing.

In examples, spoofers generate spoofed GNSS signals that captures GNSS receivers tracking loops so that GNSS receivers yield the position solution that the spoofers control. In examples, spoofing attackers may be able to gain knowledge of target position and velocity for a particular GNSS receiver (such as through Automatic Dependent Surveillance-Broadcast (ADS-B), radar tracking, and/or an on-board-target spoofer). In examples, this could enable the spoofers to attack without inducing a position jump that would otherwise trigger monitors screening for position jumps. In examples, spoofers may generate the signals to avoid inducing a large jump in the position solution. In examples, spoofers may provide spoofed GNSS signals that start with the receiver where it already is and then slowly bring it off course.

In examples, spoofers are not able to effectively know what is going on in GNSS receiver clocks or the specific clock error of a particular GNSS receiver. In examples, a spoofer will thusly not be able to avoid inducing a jump in the observed clock error. In examples, spoofers introduce a clock jump in GNSS receivers' Position-Velocity-Time (PVT) solutions. In examples, where the spoofer repeats augmented versions of received GNSS signals, the clock error will jump by the line-of-site distance added by adding the spoofer into the transmission path from the GNSS satellites to the GNSS receiver. In examples, the spoofing attacks can be detected by monitoring the receiver clock error state. In examples, the clock jump can be detected by monitoring the clock solution through a basic n-th order moving window curve fit. In examples, the n-th order is an integer, such as 2, 3, 4, 5, 6, 7, 8, 9, etc. In examples, the time window is a quantity of seconds, such as 10, 20, 30, 40, 50, 60, 70, 80, 90, 100, etc.

In examples, the computed clock offset can be observed over time to determine whether the computed clock offset inconsistently jumps, which is evidence of the GNSS receiver now locking onto a spoofed signal. In examples, the monitoring can be done with curve fit residuals test(s). In examples, through parametric analysis, the jump is detectable from a GNSS receiver with any order curve fit and between a 10 and 60 second window. In examples, the raw clock error at a specific sampled time is placed into a moving time window and fit to a curve. In examples, additional raw clock error at additional specific sampled times are placed into the moving time window and fit to the curve.

In examples, the clock offset of GNSS navigation solutions is monitored by fitting a moving-window curve to its values and then looking for divergences from that curve fit in an epoch-by-epoch nature. In examples, spoofing attacks induce a jump in computed clock offset. In examples, when a spoofer attacks a target, the target GNSS solution will have a jump in clock offset because of the added distance the signal must travel to the target antenna. In examples, the additional delay from the added distance of travel results in an added bias to all pseudorange measurements (which include the pseudo distance between a satellite and a navigation satellite receiver). In examples, the jump can be on the level of tens or hundreds of microseconds (such as 100 microseconds).

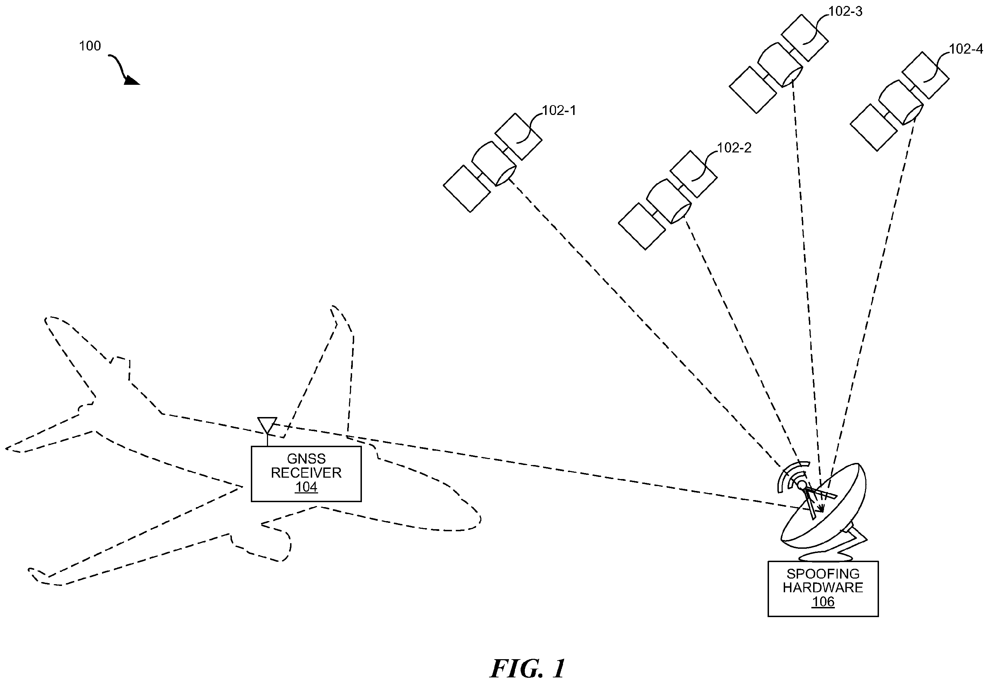

Figure 1 is a block diagram illustrating a GNSS system 100. The GNSS system 100 includes a plurality of GNSS satellites 102 (including any combination of GNSS satellites, such as GNSS satellite 102-1, GNSS satellite 102-2, GNSS satellite 102-3, and GNSS satellite 102-4) and at least one GNSS receiver 104 for determining position of a vehicle (such as an airborne, water borne, land based, or space vehicle), person, animal, or other moving object based on signals received from the plurality of GNSS satellites 102. In examples, GNSS spoofing hardware 106 provides a spoofed signal to the GNSS receiver 104. In examples, the GNSS spoofing hardware 106 receives GNSS signals from the GNSS satellites 102 and provides modified version(s) of the GNSS signals as the spoofed signal to the GNSS receiver. In examples, the GNSS receiver 104 is configured to receive a plurality of GNSS signals. While the GNSS receiver 104 is configured to receive GNSS signals from the plurality of GNSS satellites 102, the GNSS receiver 104 also inadvertently and undesirably receives spoofed GNSS signals from the GNSS spoofing hardware 106. In examples, an additional clock bias is added to each pseudorange measurements for each GNSS satellite 102 in the spoofed data.

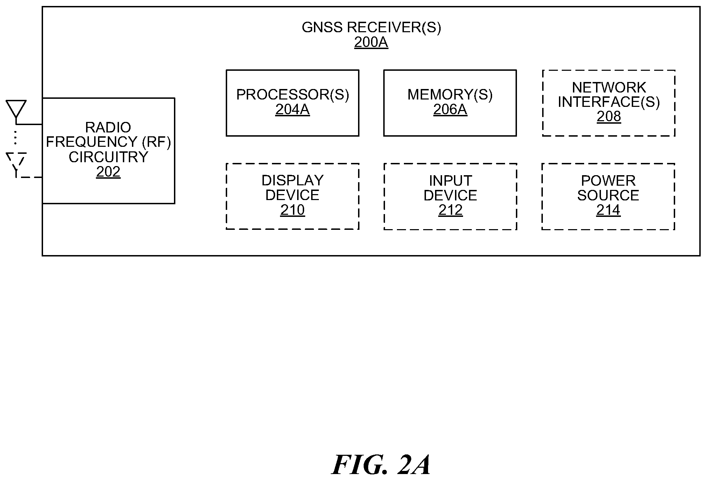

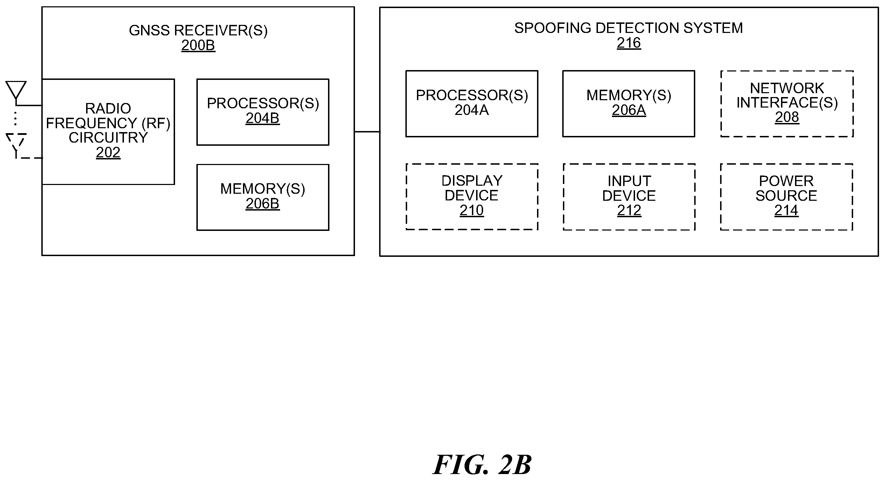

Figures 2A-2B are block diagrams illustrating systems. Figure 2A is block diagram illustrating at least one GNSS receiver 200A that includes spoofing detection functionality. In examples, GNSS receiver 200A implements the GNSS receiver 104. The at least one GNSS receiver 200A includes radio frequency (RF) circuitry 202, at least one processor 204A, at least one memory 206A, at least one optional network interface 208, optional display device 210, optional input device 212, and optional power source 214. Figure 2B is a block diagram illustrating at least one GNSS receiver 200B and a separate spoofing detection system 216. In examples, GNSS receiver 200A implements the GNSS receiver 104. The at least one GNSS receiver 200B includes the radio frequency (RF) circuitry 202, the at least one processor 204A, and the at least one memory 206A. The at least one spoofing detection system 216 includes at least one processor 204B, at least one memory 206B, the at least one optional network interface 208, the optional display device 210, the optional input device 212, and the optional power source 214. In examples, the components of the at least one GNSS receiver 200A and the at least one GNSS receiver 200B can be implemented using any physical components and/or circuitry.

In examples, the radio frequency (RF) circuitry 202 includes or is coupled to any of antenna(s), preamplifier(s), mixer(s), band pass filter(s), other filter(s), code tracking loop(s), carrier tracking loop(s), channel(s), at least one GNSS receiver clock, etc. In examples, the RF circuitry 202 receives GNSS signals for a plurality of GNSS satellites and converts the GNSS signals from radio frequency (RF) signals into baseband digital signals. In examples, the RF circuitry 202: (1) filters and amplifies the RF signals; (2) down-converts the RF signals to baseband signals; (3) digitization from analog to digital signals using analog to digital converters (ADC); and/or (4) automatic gain control (AGC). In examples, the RF circuitry 202 includes at least one GNSS receiver clock. In examples, at least one GNSS receiver clock is external to the RF circuitry 202 within the at least one GNSS receiver 200A (having spoofing detection functionality) or the at least one GNSS receiver 200B. In examples, the at least one GNSS receiver clock includes a crystal oscillator such as a temperature compensated crystal oscillator (TCXO), an oven controlled crystal oscillator (OCXO), voltage controlled crystal oscillator (VCXO), and/or a clock oscillator (XO). In examples, the at least one GNSS receiver clock is used by other components within the GNSS receiver 200A (having the spoofing detection functionality) or the GNSS receiver 200B. In examples, the at least one GNSS receiver clock is used to provide timing information for GNSS solutions. In examples, the at least one GNSS receiver clock is used to generate a clock used by the RF circuitry 202 for down-converting RF signals to baseband signals.

The at least one processor 204A and/or the at least one processor 204B can be any known processor, such as a general purpose processor (GPP) or special purpose (such as a field-programmable gate array (FPGA), application-specific integrated circuit (ASIC) or other integrated circuit or circuitry), any programmable logic device, or any circuitry. In examples, the at least one memory 206A and/or the at least one memory 206B can be any device, mechanism, or populated data structure used for storing information. In examples, the at least one memory 206A and/or the at least one memory 206B can be or include any type of volatile memory, nonvolatile memory, and/or dynamic memory. In examples, the at least one memory 206A and/or the at least one memory 206B can be random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs) and/or the like. In accordance with some embodiments, the at least one memory 206A and/or the at least one memory 206B may include one or more disk drives, flash drives, one or more databases, one or more tables, one or more files, local cache memories, processor cache memories, relational databases, flat databases, and/or the like. In addition, those of ordinary skill in the art will appreciate many additional devices and techniques for storing information, which can be used as the at least one memory 206A and/or the at least one memory 206B. The at least one memory 206A and/or the at least one memory 206B may be used to store instructions for running one or more applications or modules on the at least one processor 204A and/or the at least one processor 204B. In examples, the at least one memory 206A and/or the at least one memory 206B could be used in one or more examples to house all or some of the instructions needed to execute the functionality discussed herein.

In examples, the at least one optional network interface 208 includes or is coupled to at least one optional antenna for communication with a network. In examples, the at least one optional network interface 208 includes at least one of an Ethernet interface, a cellular radio access technology (RAT) radio, a Wi-Fi radio, a Bluetooth radio, or a near field communication (NFC) radio. In examples, the at least one optional network interface 208 includes a cellular radio access technology radio configured to establish a cellular data connection (mobile Internet) of sufficient speeds with a remote server using a local area network (LAN) or a wide area network (WAN). In examples, the cellular radio access technology includes at least one of third generation (3G), fourth generation (4G), fifth generation (5G), etc. or other appropriate communication services or a combination thereof. In examples, the at least one optional network interface 208 includes a Wi-Fi (IEEE 802.11) radio configured to communicate with a wireless local area network. In examples, the at least one optional network interface 208 includes a near field radio communication device that is limited to close proximity communication, such as a passive near field communication (NFC) tag, an active near field communication (NFC) tag, a passive radio frequency identification (RFID) tag, an active radio frequency identification (RFID) tag, a proximity card, or other personal area network device.

In examples, the at least one optional display device 210 includes at least one of light emitting diode (LED), liquid crystal display (LCD), light emitting diode (LED) display, organic light emitting diode (OLED) display, MicroLED, or e-ink display. In examples, the at least one optional input device 212 includes at least one of a touchscreen (including capacitive and resistive touchscreens), a stylus, a touchpad, a capacitive button, a mechanical button, a switch, a dial, a keyboard, a mouse, a camera, a biometric sensor/scanner, a microphone, etc. In examples, the at least one optional display device 210 is combined with the at least one optional input device 212 into a human machine interface (HMI) for user interaction with the system(s) 100. In examples, at least one optional power source 214 is used to provide power to the various components of the computing system(s) 100.

In examples, the at least one GNSS receiver(s) 200A and/or the at least one GNSS receiver(s) 200B determines GNSS measurements based on GNSS signals. In examples, the GNSS signals are received from the plurality of GNSS satellites 102 (desired) and/or the GNSS spoofing hardware 106 (undesired). In examples, the GNSS signals received include pseudorange. In examples, the at least one GNSS receiver(s) 200A and/or the at least one GNSS receiver(s) 200B determine GNSS measurements based on the GNSS signals. In examples, the at least one GNSS receiver(s) 200A and/or the at least one GNSS receiver(s) 200B compute the Position-Velocity-Time (PVT) solution including the clock offset (T). In examples, the at least one GNSS receiver(s) 200A and/or the at least one GNSS receiver(s) 200B compute three-dimensional position (including latitude, longitude, and altitude; or X, Y, and Z coordinates) and the GNSS clock offset (T). In examples, the at least one GNSS receiver(s) 200A and/or the at least one GNSS receiver(s) 200B also compute velocity or other data. In examples, the GNSS receiver(s) 200 compute the GNSS clock offset at the same time and with the same equations as position.

In examples, the at least one GNSS receiver(s) 200A (having the spoofing detection functionality) and/or the spoofing detection system 216 is configured to place the clock offset of the solution into a moving window time buffer. In examples, the moving window time buffer is stored in the at least one memory 206A. In examples, the moving window time buffer is used to track the clock offset solutions over a time window. In examples, the clock error can be monitored through a basic polynomial/curve fit. In examples, the order of the curve fit and/or the size of the time window are design parameters. In examples, an assumption is made that spoofing is not occurring at startup of the GNSS receiver(s) 200. In examples, the moving window time buffer is stored in memory(s) 206A of the at least one GNSS receiver 200A (having the spoofing detection functionality) and/or the at least one spoofing detection system 216.

In examples, the at least one GNSS receiver(s) 200A (having the spoofing detection functionality) and/or the at least one spoofing detection system 216 is configured to perform a curve fit procedure on the clock offset of the solution in the moving time buffer to obtain a curve fit. In examples, the curve fit procedure is used to look for inconsistencies (such as jumps and/or spikes) in the clock offset over time. In examples, the curve fit is at least one of a best fit, a least squares estimate, a linear regression, and/or a fit to a parabola, a cubic, or a quadratic. In examples, the data is fit to the curve over some fixed window in time. In examples, the curve fit is a polynomial, the order of which is a design parameter. In examples, there are gaps in the data and the data is non-continuous. In examples, the GNSS receiver(s) 200 is configured to output a curve and residuals to the curve from the curve fit procedure.

In examples, the at least one GNSS receiver(s) 200 is configured to compute the curve fit residuals over the time window by subtracting the curve fit from the clock offset. In examples, the GNSS receiver(s) 200 is configured to examine the magnitudes of the curve fit residuals over the time window to identify a largest curve fit residual of the curve fit residuals in the time window. In examples, the differences between the curve fit replica and the raw data is generally small. In examples, where there is an inconsistency that is a jump in the raw clock offset data, while the curve fit itself won't capture the jump because the curve fit is designed to smooth the raw clock offset data, the jump in the raw clock offset data will show up as a step function in the clock fit residual (which is the difference in the curve fit from the raw clock offset data).

In examples, the GNSS receiver(s) 200 is configured to determine whether the largest curve fit residual in the time window exceeds a predetermined detection threshold. In examples, this is monitoring the curve fit residual for jumps. In examples, this works even over periods of jamming. In examples, the GNSS receiver(s) 200 is configured to determine spoofing is present when the largest curve fit residual in the time window exceeds the predetermined detection threshold. In examples, the detection threshold is a design parameter. In examples the detection threshold is receiver specific because of the differences in the GNSS receivers. In examples, aviation GNSS receivers have lower tolerances then do mobile telephone GNSS receivers and accordingly the aviation GNSS receivers thusly have lower thresholds than do the mobile telephone GNSS receivers. In examples, when the jump in clock fit residual exceeds a predetermined detection threshold, an indication and/or an alarm condition is provided to a user (such as a pilot) from the GNSS receiver(s) 200. In examples, the indication is at least one of a visual indication, an audible indication, or a tactile indication.

In examples, as long as the raw clock offset (based on the frequency error) changes gradually enough, it is able to gradually drift (increase or decrease). In examples, if the raw clock offset (frequency error) changes quickly enough, it is seen as a spike within the window where the curve fit calculation is happening. In examples where the spike in the raw clock offset meets a specified threshold, then it is determined that spoofing is present. In examples, after multiple hours into a flight, the raw clock offset may have drifted substantially from its initial value at the beginning of the flight when the GNSS receiver(s) 200 first acquired the signal and locked on. In examples, it is not particularly relevant how much drift has occurred if it is outside of the window where the curve fit calculation is happening.

In examples, the window size of the time window and/or order of the curve fit may be selected based on the precision and/or quality of the clock and/or any varying thermal conditions that may drive clock dynamics to be larger than normal. In examples, the window size is selected to be an appropriate length (such as a couple of minutes). In examples, the window size is selected to be big enough to operate over a period where the GNSS receiver(s) 200 is likely to experience a jump. In examples, the window size is selected to be big enough to allow the GNSS receiver(s) 200 to re-acquire a spoofed signal after losing lock after becoming jammed when spoofers begin to operate. In examples, the GNSS receiver(s) 200 may loose lock and take some amount of time (such as between ten seconds and 60 seconds) to re-acquire the spoofed signal after loosing lock after becoming jammed. In examples, the GNSS receiver(s) 200 will identify the clock error jump once the GNSS receiver(s) 200 re-acquire the spoofed signal. In examples, the GNSS receiver(s) 200 can still identify the clock error jump even in cases where the signals are not continuous because the pseudo range are going to be "additionally" biased with the added clock bias regardless of the gap in time before the GNSS receiver(s) 200 re-acquire the signals. In examples, the window size is selected to be short enough (such as less than half an hour) because it may be difficult to reliably know what is going on over 30 minutes. In examples, the quality of the oscillator may also factor into the window size selection.

In examples, the spoofed GNSS signal is a signal that spoofing multiple GNSS satellite signals at once (such as all visible GNSS signals). In examples, the GNSS spoofing hardware may receive all the GNSS signals that are available at that particular location and regenerate them in some fashion. In examples, the spoofed GNSS signals may be generated by repeating modified versions of the GPS signals received at the GNSS spoofing hardware.

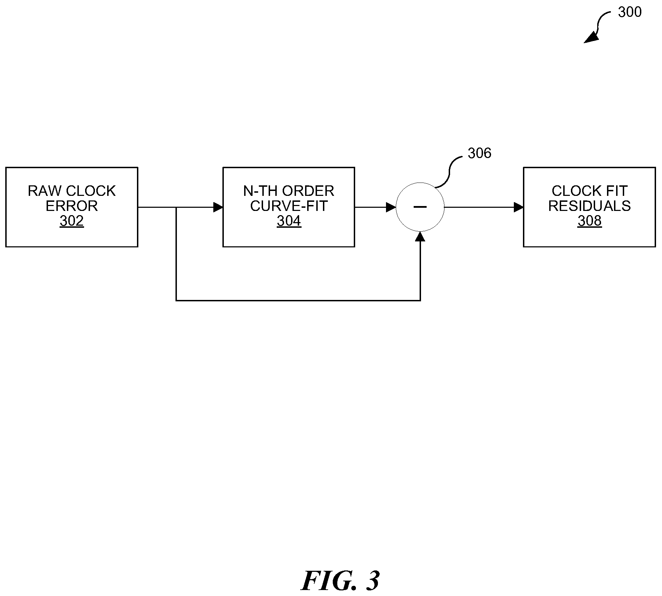

Figure 3 is a block diagram illustrating a functional block diagram for an example system 300 for generating curve fit residuals. In examples, the system 300 can be implemented using circuitry and components of any of systems 2A-2B. In examples, system 300 receives raw clock error 302 and generates an n-th order curve-fit 304 (including filtered clock error) from the raw clock error 302. In examples, the n-th order curve fit comprises an n-th order polynomial curve fit using a polynomial of the n-th degree. In examples, system 300 subtracts the n-th order curve fit 304 from the raw clock error 302 to generate the curve fit residuals 308. In examples, when the curve fit residuals exceed a threshold, spoofing is determined to be present.

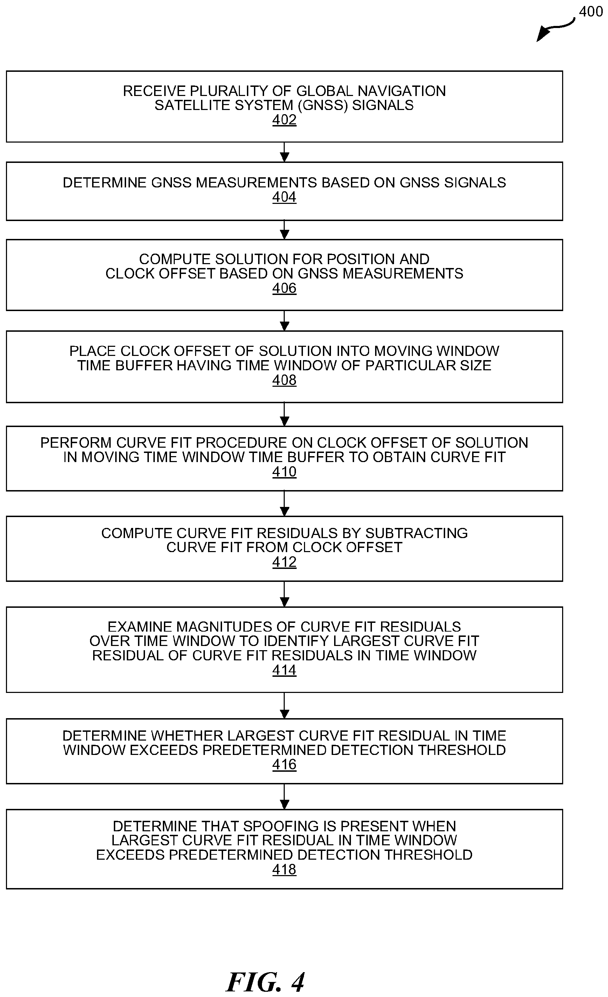

Figure 4 is an example method 400 for determining spoofing is present in global navigation satellite system (GNSS) signals. In examples, the example method 400 is executed using any of system 100, GNSS receiver(s) 200A (having the spoofing detection functionality), or spoofing detection system 216 described above. In examples, method 400 begins at block 402 with receiving a plurality of global navigation satellite system (GNSS) signals. In examples, method 400 proceeds to block 404 with determining GNSS measurements based on the GNSS signals. In examples, method 400 proceeds to block 406 with computing a solution for position and clock offset using the GNSS measurements. In examples, method 400 proceeds to block 408 with placing the clock offset of the solution into a moving window time buffer having a time window of a particular size.

In examples, method 400 proceeds to block 410 with performing a curve fit procedure on the clock offset of the solution in the moving window time buffer to obtain a curve fit. In examples, method 400 proceeds to block 412 with computing curve fit residuals by subtracting the curve fit from the clock offset. In examples, method 400 proceeds to block 414 with examining magnitudes of the curve fit residuals over the time windows to identify a largest curve fit residual of the curve fit residuals in the time window. In examples, method 400 proceeds to block 416 with determining whether the largest curve fit residuals in the time window exceeds a predetermined detection threshold. In examples, method 400 proceeds to block 418 with determining spoofing is present when the largest curve fit residual in the time windows exceeds the predetermined detection threshold.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium (such as a non-transitory computer-readable medium) tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions (such as a non-transitory computer-readable medium) and data include all forms of non-volatile memory and storage media, including by way of example random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs), magnetooptical disks, and/or the like. Any of the foregoing may be supplemented by, or incorporated in, any known processor, such as a general purpose processor (GPP) or special purpose (such as a field-programmable gate array (FPGA), application-specific integrated circuit (ASIC) or other integrated circuit or circuitry), any programmable logic device, and/or any other circuitry.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes a system comprising: circuitry configured to: receive a plurality of global navigation satellite system (GNSS) signals; determine GNSS measurements based on the GNSS signals; compute a solution for position and clock offset based on the GNSS measurements; place the clock offset of the solution into a moving window time buffer having a time window of a particular size; perform a curve fit procedure on the clock offset of the solution in the moving window time buffer to obtain a curve fit; compute curve fit residuals by subtracting the curve fit from the clock offset; examine magnitudes of the curve fit residuals over the time window to identify a largest curve fit residual of the curve fit residuals in the time window; determine whether the largest curve fit residual in the time window exceeds a predetermined detection threshold; and determine that spoofing is present when the largest curve fit residual in the time window exceeds the predetermined detection threshold.

Example 2 includes the system of Example 1, wherein the curve fit comprises an n-th order polynomial curve fit using a polynomial of the n-th degree.

Example 3 includes the system of Example 2, wherein the n-th degree is selected from one of 2, 3, 4, 5, 6, 7, 8, or Example 9.

Example 4 includes the system of any of Examples 1-3, wherein the curve fit comprises at least one of a best fit, a least squares estimate, a linear regression, a fit to a parabola, a fit to a cubic, or a fit to a quadratic.

Example 5 includes the system of any of Examples 1-4, wherein the GNSS signals are received from GNSS spoofing hardware instead of from GNSS satellites.

Example 6 includes the system of any of Examples 1-5, wherein the system comprises at least one GNSS receiver having the circuitry.

Example 7 includes the system of any of Examples 1-6, wherein the circuitry comprises: at least one GNSS receiver having a first portion of the circuitry configured to: receive the plurality of global navigation satellite system (GNSS) signals; determine the GNSS measurements based on the GNSS signals; and compute the solution for the position and the clock offset based on the GNSS measurements; and at least one spoofing detection system having a second portion of the circuitry configured to: place the clock offset of the solution into the moving window time buffer having the time window of the particular size; perform the curve fit procedure on the clock offset of the solution in the moving window time buffer to obtain the curve fit; compute the curve fit residuals by subtracting the curve fit from the clock offset; examine the magnitudes of the curve fit residuals over the time window to identify the largest curve fit residual of the curve fit residuals in the time window; determine whether the largest curve fit residual in the time windows exceeds the predetermined detection threshold; and determine that spoofing is present when the largest curve fit residual in the time window exceeds the predetermined detection threshold.

Example 8 includes the system of any of Examples 1-7, wherein the circuitry is further configured to: provide at least one of an alarm condition, a visual indication, an audible indication, or a tactile indication that the spoofing is present.

Example 9 includes a method comprising: receiving a plurality of global navigation satellite system (GNSS) signals; determining GNSS measurements based on the GNSS signals; computing a solution for position and clock offset based on the GNSS measurements; placing the clock offset of the solution into a moving window time buffer having a time window of a particular size; performing a curve fit procedure on the clock offset of the solution in the moving window time buffer to obtain a curve fit; computing curve fit residuals by subtracting the curve fit from the clock offset; examining magnitudes of the curve fit residuals over the time window to identify a largest curve fit residual of the curve fit residuals in the time window; determining whether the largest curve fit residual in the time window exceeds a predetermined detection threshold; and determining that spoofing is present when the largest curve fit residual in the time window exceeds the predetermined detection threshold.

Example 10 includes the method of Example 9, wherein the curve fit comprises an n-th order polynomial curve fit using a polynomial of the n-th degree.

Example 11 includes the method of any of Examples 9-10, wherein the curve fit comprises at least one of a best fit, a least squares estimate, a linear regression, a fit to a parabola, a fit to a cubic, or a fit to a quadratic.

Example 12 includes the method of any of Examples 9-11, wherein the GNSS signals are received from GNSS spoofing hardware instead of from GNSS satellites.

Example 13 includes the method of any of Examples 9-12, wherein: receiving, at at least one GNSS receiver, the plurality of GNSS signals; determining, at the at least one GNSS receiver, the GNSS measurements based on the GNSS signals; computing, at the at least one GNSS receiver, the solution for the position and the clock offset based on the GNSS measurements; placing, at the at least one GNSS receiver, the clock offset of the solution into the moving window time buffer having the time window of the particular size; performing, at the at least one GNSS receiver, the curve fit procedure on the clock offset of the solution in the moving window time buffer to obtain the curve fit; computing, at the at least one GNSS receiver, the curve fit residuals by subtracting the curve fit from the clock offset; examining, at the at least one GNSS receiver, the magnitudes of the curve fit residuals over the time window to identify the largest curve fit residual of the curve fit residuals in the time window; determining, at the at least one GNSS receiver, whether the largest curve fit residual in the time window exceeds the predetermined detection threshold; and determining, at the at least one GNSS receiver, that spoofing is present when the largest curve fit residual in the time window exceeds the predetermined detection threshold.

Example 14 includes the method of any of Examples 9-13, wherein: receiving, at at least one GNSS receiver, the plurality of GNSS signals; determining, at the at least one GNSS receiver, the GNSS measurements based on the GNSS signals; computing, at the at least one GNSS receiver, the solution for the position and the clock offset based on the GNSS measurements; placing, at a spoofing detection system, the clock offset of the solution into the moving window time buffer having the time windows to obtain the curve fit; performing, at the spoofing detection system, the curve fit procedure on the clock offset of the solution in the moving window time buffer to obtain the curve fit; computing, at the spoofing detection system, the curve fit residuals by subtracting the curve fit from the clock offset; examining, at the spoofing detection system, the magnitudes of the curve fit residuals over the time windows to identify the largest curve fit residual of the curve fit residuals in the time windows; determining, at the spoofing detection system, whether the largest curve fit residual in the time window exceeds the predetermined detection threshold; and determining, at the spoofing detection system, that spoofing is present when the largest curve fit residual in the time window exceeds the predetermined detection threshold.

Example 15 includes the method of any of Examples 9-14, further comprising: providing at least one of an alarm condition, a visual indication, an audible indication, or a tactile indication that the spoofing is present.

Example 16 includes a non-transitory computer-readable medium comprising a set of instructions that, when executed by at least one processor, cause the at least one processor to: receive a plurality of global navigation satellite system (GNSS) signals; determine GNSS measurements based on the GNSS signals; compute a solution for position and clock offset based on the GNSS measurements; place the clock offset of the solution into a moving window time buffer having a time window of a particular size; perform a curve fit procedure on the clock offset of the solution in the moving window time buffer to obtain a curve fit; compute curve fit residuals by subtracting the curve fit from the clock offset; examine magnitudes of the curve fit residuals over the time window to identify a largest curve fit residual of the curve fit residuals in the time window; determine whether the largest curve fit residual in the time window exceeds a predetermined detection threshold; and determine that spoofing is present when the largest curve fit residual in the time window exceeds the predetermined detection threshold.

Example 17 includes the non-transitory computer-readable medium of Example 16, wherein the curve fit comprises an n-th order polynomial curve fit using an n-th order polynomial curve fit using a polynomial of the n-th degree.

Example 18 includes the non-transitory computer-readable medium of any of Examples 16-17, wherein the curve fit comprises at least one of a best fit, a least squares estimate, a linear regression, a fit to a parabola, a fit to a cubic, or a fit to a quadratic.

Example 19 includes the non-transitory computer-readable medium of any of Examples 16-18, wherein the GNSS signals are received from GNSS spoofing hardware instead of from GNSS satellites.

Example 20 includes the non-transitory computer-readable medium of any of Examples 16-19, wherein the set of instructions, when executed by the at least one processor, further causes the at least one processor to: provide at least one of an alarm condition, a visual indication, an audible indication, or a tactile indication that the spoofing is present.

## Claims

1. A system comprising:
circuitry configured to:
receive a plurality of global navigation satellite system (GNSS) signals;
determine GNSS measurements based on the GNSS signals;
compute a solution for position and clock offset based on the GNSS measurements;
place the clock offset of the solution into a moving window time buffer having a time window of a particular size;
perform a curve fit procedure on the clock offset of the solution in the moving window time buffer to obtain a curve fit;
compute curve fit residuals by subtracting the curve fit from the clock offset;
examine magnitudes of the curve fit residuals over the time window to identify a largest curve fit residual of the curve fit residuals in the time window;
determine whether the largest curve fit residual in the time window exceeds a predetermined detection threshold; and
determine that spoofing is present when the largest curve fit residual in the time window exceeds the predetermined detection threshold.

2. The system of claim 1, wherein the curve fit comprises an n-th order polynomial curve fit using a polynomial of the n-th degree.

3. The system of claim 1, wherein the curve fit comprises at least one of a best fit, a least squares estimate, a linear regression, a fit to a parabola, a fit to a cubic, or a fit to a quadratic.

4. The system of claim 1, wherein the system comprises at least one GNSS receiver having the circuitry.

5. The system of claim 1, wherein the circuitry comprises:
at least one GNSS receiver having a first portion of the circuitry configured to:
receive the plurality of global navigation satellite system (GNSS) signals;
determine the GNSS measurements based on the GNSS signals; and
compute the solution for the position and the clock offset based on the GNSS measurements; and
at least one spoofing detection system having a second portion of the circuitry configured to:
place the clock offset of the solution into the moving window time buffer having the time window of the particular size;
perform the curve fit procedure on the clock offset of the solution in the moving window time buffer to obtain the curve fit;
compute the curve fit residuals by subtracting the curve fit from the clock offset;
examine the magnitudes of the curve fit residuals over the time window to identify the largest curve fit residual of the curve fit residuals in the time window;
determine whether the largest curve fit residual in the time windows exceeds the predetermined detection threshold; and
determine that spoofing is present when the largest curve fit residual in the time window exceeds the predetermined detection threshold.

6. The system of claim 1, wherein the circuitry is further configured to:
provide at least one of an alarm condition, a visual indication, an audible indication, or a tactile indication that the spoofing is present.

7. A method comprising:
receiving a plurality of global navigation satellite system (GNSS) signals;
determining GNSS measurements based on the GNSS signals;
computing a solution for position and clock offset based on the GNSS measurements;
placing the clock offset of the solution into a moving window time buffer having a time window of a particular size;
performing a curve fit procedure on the clock offset of the solution in the moving window time buffer to obtain a curve fit;
computing curve fit residuals by subtracting the curve fit from the clock offset;
examining magnitudes of the curve fit residuals over the time window to identify a largest curve fit residual of the curve fit residuals in the time window;
determining whether the largest curve fit residual in the time window exceeds a predetermined detection threshold; and
determining that spoofing is present when the largest curve fit residual in the time window exceeds the predetermined detection threshold.

8. The method of claim 7, wherein the curve fit comprises an n-th order polynomial curve fit using a polynomial of the n-th degree.

9. The method of claim 7, wherein the curve fit comprises at least one of a best fit, a least squares estimate, a linear regression, a fit to a parabola, a fit to a cubic, or a fit to a quadratic.

10. A non-transitory computer-readable medium comprising a set of instructions that, when executed by at least one processor, cause the at least one processor to:
receive a plurality of global navigation satellite system (GNSS) signals;
determine GNSS measurements based on the GNSS signals;
compute a solution for position and clock offset based on the GNSS measurements;
place the clock offset of the solution into a moving window time buffer having a time window of a particular size;
perform a curve fit procedure on the clock offset of the solution in the moving window time buffer to obtain a curve fit;
compute curve fit residuals by subtracting the curve fit from the clock offset;
examine magnitudes of the curve fit residuals over the time window to identify a largest curve fit residual of the curve fit residuals in the time window;
determine whether the largest curve fit residual in the time window exceeds a predetermined detection threshold; and
determine that spoofing is present when the largest curve fit residual in the time window exceeds the predetermined detection threshold.
